(19) Europäisches Patentamt
European Patent Office
Office européen des brevets

(11) **EP 4 494 801 A1**

(12) **EUROPÄISCHE PATENTANMELDUNG**

(43) Veröffentlichungstag:
**22.01.2025   Patentblatt 2025/04**

(21) Anmeldenummer: 23186329.1

(22) Anmeldetag: **19.07.2023**

(51) Internationale Patentklassifikation (IPC):
**B23K 26/03** (2006.01)    **B23K 26/046** (2014.01)
**B23K 26/38** (2014.01)    **B23K 26/70** (2014.01)
**B23K 31/00** (2006.01)

(52) Gemeinsame Patentklassifikation (CPC):
**B23K 26/032; B23K 26/034; B23K 26/046;
B23K 26/38; B23K 26/707; B23K 31/006**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Bystronic Laser AG
3362 Niederönz (CH)**

(72) Erfinder: **FAHRNI, Christoph
3363 Oberönz (CH)**

(74) Vertreter: **Schwarz, Claudia
Schwarz + Kollegen
Patentanwälte
Heilmannstraße 19
81479 München (DE)**

(54) **REGELUNG EINES OPTISCHEN SYSTEMS EINER LASERSCHNEIDMASCHINE ZUR KOMPENSATION DER THERMISCHEN DRIFT**

(57)    Die vorliegende Erfindung betrifft ein Verfahren, eine Vorrichtung (100) und ein System, einen Laserschneidkopf und ein Computerprogramm zur Regelung eines optischen Systems einer Laserschneidmaschine (L). Das System umfasst einem Regler (105), der zum Ermitteln zumindest einer Regelgröße zum Neu-Einstellen des optischen Systems anhand der von einem Driftabschätzer (104) abgeschätzten Veränderung der Fokuslage bestimmt ist, um die veränderte Fokuslage in die jeweils eingestellte SOLL-Fokuslage zurückzuführen, falls der Driftabschätzer (104) eine, einen vorgegebenen Schwellwert überschreitende Veränderung der Fokuslage abgeschätzt hat. Die Abschätzung erfolgt auf Basis von ersten und zweiten optischen Signalen.

FIG. 2

**Beschreibung**

Die vorliegende Erfindung betrifft ein Verfahren zur Regelung eines optischen Systems einer Laserschneidmaschine zur Kompensation der thermischen Drift, eine entsprechende Vorrichtung, einen Laserschneidkopf mit der Vorrichtung und ein System sowie ein Computerprogramm.

Die Bearbeitung von Werkstücken, insbesondere das Schneiden, mittels einer Laserbearbeitungsmaschine erfordert die exakte Einstellung oder Regelung des optischen Systems, umfassend Linsen, Spiegel und/oder andere optische Komponenten, um den Laserstrahl an der gewünschten Position, in der Regel innerhalb des Werkstücks, zu fokussieren. Ist die Fokuslage nicht richtig eingestellt, kann es zu Qualitätseinbußen oder Fehlern kommen. Das optische System selbst erwärmt sich allerdings während der Materialbearbeitung mittels Laserlicht durch Absorption, wodurch sich auch die optischen Eigenschaften des Systems, beispielsweise des verwendeten Linsensystems, verändern können. Dann kann es auch zu einer Veränderung der Fokuslage des Strahlenverlaufs des Laserlichts kommen. Eine Veränderung dieser Fokuslage relativ zur Position der zu bearbeitenden Materialien kann, wie erwähnt, dazu führen, dass das gewünschte Bearbeitungsergebnis nicht erreicht wird.

Sensoren, die zuverlässige Signale über den Zustand der Optik bzw. des optischen Systems liefern, sind nicht verfügbar. Diese Messung der Temperatur der Linse ist beispielsweise nicht so einfach, da das Material der Linse ein schlechter Wärmeleiter ist und die Laserstrahlung den tatsächlichen Wert stören kann.

Aus der DE 10 2018 119 900 B4 ist ein Verfahren bekannt, eine Brennpunktverschiebung zu messen, die durch Verschmutzung von Komponenten des optischen Systems, insbesondere der Linse, entsteht. Die Energiemenge des Laserlichts wird z.B. mittels Thermosensoren gemessen.

Bekannt ist es aus der DE 10 2012 001 609 DE eine Veränderung der Fokuslage mittels Fotodioden zu messen, um die veränderte Fokuslage mit geringem apparativen Aufwand zu kompensieren.

Im Stand der Technik ist es weiterhin aus der DE 10 2019 122 064 A1 bekannt, einer Veränderung der Fokuslage, bedingt durch thermische Einflüsse, durch geeignete Kühlmaßnahmen entgegenzuwirken.

Ausgehend von dem Stand der Technik ist es die Aufgabe der vorliegenden Offenbarung, ein Verfahren, eine Vorrichtung, einen Laserschneidkopf und ein System sowie ein Computerprogramm bereitzustellen, das/die/der es ermöglichen, die Qualität des Schneidprozesses zu verbessern und insbesondere das Risiko eines Schneidverlusts (Loss of Cut) möglichst früh zu erkennen und zu verringern. Ferner sollen bisherige Laserschneidmaschinen, insbesondere ohne aufwände konstruktive Erweiterungen, verwendbar sein.

Diese Aufgabe wird durch die beiliegenden unabhängigen Patentansprüche gelöst, nämlich durch ein Verfahren nach Anspruch 1, eine Vorrichtung nach Anspruch 12, einen Laserschneidkopf nach Anspruch 13, ein System nach Anspruch 14 und ein Computerprogramm nach Anspruch 15.

In einem ersten Aspekt bezieht sich die Erfindung auf ein Verfahren zur Regelung eines optischen Systems einer Laserschneidmaschine. Das Verfahren kann folgende Verfahrensschritte umfassen:

- Erzeugen oder Einlesen von Referenzdaten; die Referenzdaten können aus ersten optischen Signalen, welche ein Prozessleuchten während eines Referenz-Schneidprozesses in einem ersten Zustand des optischen Systems repräsentieren, berechnet werden, wobei den ersten optischen Signalen jeweils eine eingestellte Fokuslage und/oder jeweils ein Einstellwert des optischen Systems zugeordnet sein kann; die Referenzdaten können insbesondere einen ersten Merkmalsvektor umfassen, der aus den ersten optischen Signalen extrahiert wird;

- Einstellen des optischen Systems auf eine SOLL-Fokuslage und Initiieren eines Schneidprozesses;

- Einlesen von zweiten optischen Signalen, die ein Prozessleuchten während des initiierten Schneidprozesses in einem zweiten Zustand des optischen Systems repräsentieren;

- Auswerten der eingelesenen zweiten optischen Signale, gegebenenfalls in vorverarbeiteter Form, insbesondere in Form eines daraus berechneten zweiten Merkmalsvektors mit einem Driftabschätzer, durch Vergleich mit den erzeugten oder eingelesenen Referenzdaten, um eine Veränderung der Fokuslage abzuschätzen;

- Ermitteln zumindest einer Regelgröße zum Neu-Einstellen des optischen Systems anhand der abgeschätzten Veränderung der Fokuslage, um die veränderte Fokuslage in die SOLL-Fokuslage zurückzuführen, die im Schritt "Einstellen" eingestellt worden ist, falls der Driftabschätzer eine, einen vorgegebenen Schwellwert überschreitende Veränderung der Fokuslage abgeschätzt hat.

Die Laserschneidmaschine umfasst einen Laser. Bei dem Laser handelt es sich um einen Hochleistungslaser, insbesondere zur Metallverarbeitung, der im Leistungsbereich von mehr als 1 kW und vorzugsweise im Bereich von 1 - 100 kW, insbesondere 4 - 100 kW, betrieben wird. Die Laserschneidmaschine kann vorzugsweise Teil einer Laserschneidanlage sein mit einem Be- und Entladesystem, einem Automatisierungssystem und/oder einem automatischen Sortiersystem. Die Laserschneidmaschine kann zum Schneiden von flächigen Werkstücken, insbesondere aus Metall (z.B. Metall- oder Blechtafeln), und/oder von rohrförmigen Werkstücken, insbesondere im Rahmen der industriellen Fertigung, ausgebildet sein.

Die Laserschneidanlage kann eine optische Sensoranordnung umfassen. Vorzugsweise ist die optische Sensoranordnung an der Laserschneidmaschine, insbesondere an, insbesondere in einem Schneidkopf des Lasers angeordnet. Die optische Sensoranordnung dient zur Erfassung der ersten und zweiten optischen Signale. Die optische Sensoranordnung umfasst zumindest einen (optischen) Sensor. Die optische Sensoranordnung kann eine Kamera sein oder umfassen, insbesondere eine CMOS- und/oder eine CCD-Kamera. Bei dem optischen Sensor kann es sich z.B. um eine Inprozess Kamera handeln. Bei dem optischen Sensor kann es sich alternativ oder kumulativ um eine 2D-Kamera handeln. Alternativ oder zusätzlich kann der optische Sensor eine 3D-Kamera sein, wie eine Stereo-Vision-Kamera, Lichtfeldkamera usw. Alternativ oder kumulativ kann die optische Sensoranordnung zumindest einen neuromorphischen Sensor (neuromorphische Kamera) umfassen. Der neuromorphische Sensor ist ein Ereignissensor, der ausgebildet ist, die sensorisch erfassten Lichtintensitätsunterschiede über die Zeit darzustellen. Der neuromorphische Sensor hat eine sehr hohe zeitliche Auflösung (im Microsekundenbereichen). Der neuromorphische Sensor kann als retinomorphischer Sensor ausgebildet sein. Alternativ oder kumulativ kann der optische Sensor zumindest eine Fotodiode sein oder umfassen und besonders bevorzugt eine Fotodiode und vorzugsweise ortsaufgelöst ein 2D-Sensor, z.B. eine CMOS-Kamera. Alternativ oder kumulativ kann die optische Sensoranordnung bedarfsweise aktiviert oder deaktiviert werden. Die optische Sensoranordnung dient zur Erfassung von Bildern. Die optische Sensoranordnung dient insbesondere zur Erfassung des Prozesslichts beim Schneiden. Alternativ oder kumulativ kann die optische Sensoranordnung Teil eines umfassenderen sensorischen Systems aus optischen und/oder akustischen und/oder Schall-basierten Sensorsystemen und optional elektronischen Komponenten (Halbleiter, Platine, etc.) sein. Die elektronischen Komponenten sind vorzugsweise ebenfalls im Schneidkopf angeordnet. Die Komponenten können zumindest eine Lichtquelle umfassen. Die Lichtquelle kann wahlweise bei Aktivierung des optischen Sensors aktiviert werden, um mit anderen Worten, beleuchtete oder unbeleuchtete Bilder zu erfassen.

Das optische System der Laserschneidmaschine dient zur Führung des Laserstrahls auf das Werkstück. Das optische System kann mehrere Komponenten, insbesondere zumindest eine optische und/oder adaptive Linse (z.B. adaptive Polymerlinse für variable Brennweiten), zumindest einen Spiegel, insbesondere Umlenkspiegel und/oder einen adaptiven Spiegel, zumindest ein Schutzglas, zumindest einen optischen Filter, ein variables Teleskop, ein Gehäuse zur Umhausung des optischen Systems und/oder weitere elektronische, mechanische und/oder optische Elemente, wie z.B. eine Beleuchtung, umfassen. Die optischen Filter können insbesondere zur Abschwächung der Intensität der emittierten Laserstrahlung und/oder Begrenzung des Wellenlängenspektrums und/oder Änderung der Polarisation verwendet werden. Das optische System und/oder seine Komponenten sind - insbesondere separat - elektronisch steuer- oder regelbar, insbesondere über die Instruktion von entsprechenden Aktuatoren. Die einzelnen Komponenten können jeweils ein unterschiedliches Temperaturverhalten aufweisen und/oder gekühlt sein. Deshalb können die Komponenten jeweils einzeln über entsprechende Befehle geregelt werden, insbesondere hinsichtlich ihrer Position (z.B. einer Linse) und/oder Funktion (z.B. Krümmung einer adaptiven Linse). Die Positionierung und/oder andere Formen der Regelung können mittels Aktuatoren erfolgen, z.B. Piezo-Aktuatoren, die steuerbar oder regelbar sind.

Die Laserschneidanlage kann in zwei Phasen betrieben werden:

1. In einer Referenzphase, als Referenz-Schneidprozess, die zur Erzeugung von Referenzdaten dient und/oder die auch als Teach-In Fahrt bezeichnet werden kann und/oder die einem produktiven Schneidprozess zeitlich vorangeht - in der Referenzphase wird der Schneidprozess als Referenz-Schneidprozess bezeichnet - und

2. In einer Produktivphase, in der das Schneiden eines Werkstückes gemäß Schneidplan erfolgt. Der in der Produktivphase ausgeführte Prozess kann als produktiver Schneidprozess bezeichnet werden (verkürzt im Folgenden auch einfach: Schneidprozess, im Unterschied zum Referenzschneidprozess).

In der (ersten Phase) Referenzphase können vorzugsweise die ersten optischen Signale erfasst und/oder in der (zweiten Phase) Produktivphase können die zweiten optischen Signale erfasst werden. Der Begriff Produktivphase bezieht sich somit auf einen (produktiven) Schneidprozess

Das zu schneidende Werkstück kann flächig (2-dimensional) oder 3-dimensional (z.B. in Form eines Hohlkörpers, insbesondere eines Rohrs) sein. Die Werkstücke können aus Metall oder einer Legierung oder aus Kunststoffen oder Kombinationen davon bestehen. Bei den Werkstücken kann es sich z.B. um Blechteile oder Blechrohre handeln.

Der Schnitt bzw. der Schneidprozess dient zur Durchtrennung und insbesondere zur vollständigen Durchtrennung oder zum Schneiden des Werkstücks und wird gemäß Befehlen einer Steuerung ausgeführt. Es erfolgt nach einem Schneidplan, der z.B. bestimmte Konturen auf z.B. einem Blech vorgeben kann. Nach dem Schneiden einer z.B. Blechtafel können die unterschiedlich konturierten, fertig geschnittenen Teile von dem verbleibenden Restblech getrennt werden. Der Schneidplan definiert, in welcher Reihenfolge, auf welcher Trajektorie und/oder mit welchen Schneidparametern Teile aus dem Werkstück geschnitten werden sollen. Es können also mehrere Konturen aus dem Werkstück geschnitten werden, wobei der Laser zum Schneiden jeweils aktiviert wird und zur Bewegung zwischen den zu schneidenden Teilen deaktiviert werden kann. Die Schneidparameter geben Teleskop, Fokuslage, Gasdruck, Laserleistung etc. vor.

Der Begriff "Einstellwert" soll hier im Plural und als Menge von Einstellwerten verstanden werden. Der Einstellwert fasst somit unterschiedliche Komponenteneinstellwerte zusammen, um die unterschiedlichen Komponenten des optischen Systems (vgl. oben: Linse, Filter, Gehäuse etc.) jeweils separat, einzeln und/oder unabhängig voneinander einzustellen und/oder neu-einzustellen.

Mit anderen Worten hat jede Komponente des optischen Systems (z.B. Spiegel, Linse etc.) einen dedizierten Komponenteneinstellwert. Alle Komponenteneinstellwerte aller Komponenten können in dem Einstellwert zusammengefasst sein. So kann z.B. ein erster Komponenteneinstellwert zur Einstellung und/oder Neu-Einstellung der optischen Linse und/oder ein zweiter Komponenteneinstellwert zur Einstellung und/oder Neu-Einstellung einer weiteren Komponente des optischen Systems bereitgestellt werden. Damit wird es möglich, das optische System sehr flexibel und/oder auch in unterschiedlichen Zuständen (insbesondere thermischen Zuständen) des optischen Systems sehr fein granular zu regeln. Der Einstellwert kann z.B. eine Positionsangabe für eine optische Linse sein oder eine Radiusangabe zur Einstellung eines adaptiven Spiegels.

Der Referenz-Schneidprozess muss nicht zwangsweise unmittelbar vor dem produktiven Schneidprozess ausgeführt werden, sondern kann z.B. in einem zurückliegenden Zeitraum ausgeführt worden sein, so dass unmittelbar vor Initiierung des (produktiven) Schneidprozesses nur die Referenzdaten von dem früher ausgeführten Referenz-Schneidprozess eingelesen werden. Vorzugsweise kann es konfiguriert werden, wann, bei welchen Triggerereignissen (z.B. Triggerbedingungen erfüllt) und/oder wie oft der Referenz-Schneidprozess ausgeführt wird. So kann es z.B. eingestellt sein, dass der Referenz-Schneidprozess für jedes neue Werkstück, insbesondere nach dem Auflegen auf dem Schneidtisch, oder nach einem vorbestimmbaren Zeitintervall (alle 2 Stunden) oder jeweils einmal pro Tag oder einmal pro Charge und/oder Maschine ausgeführt wird. Die Triggerbedingungen sind im Vorfeld über eine Benutzerschnittstelle (HMI, human machine interfacce) konfigurierbar. Alternativ kann der Referenz-Schneidprozess auch unmittelbar vor dem produktiven Schneidprozess ausgeführt werden. Er dient dazu, Referenzdaten zu erfassen, basierend auf ersten optischen Signalen von der jeweiligen Laserschneidmaschine, bei dem aktuell zu schneidenden Werkstück in einem ersten, insbesondere kalten, Zustand der Laserschneidmaschine.

Grundsätzlich dient der Referenz-Schneidprozess zur Erzeugung von Referenzdaten, basierend auf ersten optischen Signalen. Die Referenzdaten sind als elektronischer oder digitaler Datensatz zu verstehen. Die Referenzdaten können die Bilddaten von dem Referenz-Schneidprozess enthalten oder mit diesen übereinstimmen. Die Referenzdaten können vorzugsweise einer Vorverarbeitung unterzogen werden, indem z.B. ein Merkmalsvektor aus den ersten optischen Signalen berechnet wird. Die Referenzdaten können somit auch in Form von zumindest einem (extrahierten) ersten Merkmalsvektor vorliegen.

Die Referenzdaten können z.B. in Form einer ersten Datenstruktur, wie z.B. einer Look-Up-Tabelle gespeichert werden. Die erste Datenstruktur kann umfassen:

- die ersten optischen Signale (Bilder) aus dem Referenz-Schneidprozess in dem ersten (insbesondere kalten) Zustand des optischen Systems, und optional
- die jeweils eingestellte Fokuslage und optional:
- den jeweiligen Einstellwert für das optische System (vorzugsweise umfassend: mehrere Komponenteneinstellwerte für die jeweiligen Komponenten des optischen Systems).

In der ersten Datenstruktur (mit den Referenzdaten) sind die ersten optischen Signale und optional, aber bevorzugt die zugehörige eingestellte Fokuslage und optional der jeweilige Einstellwert (umfassend die jeweiligen Komponenteneinstellwerte) einander zugeordnet gespeichert, z.B. als relationale Datenbank. Zum Beispiel ist einem ersten der ersten optischen Signale, z.B. einem ersten Bild, eine erste eingestellte Fokuslage und optional ein erster Einstellwert und einem zweiten der ersten optischen Signale, z.B. einem zweiten Bild, eine zweite eingestellte Fokuslage und optional ein zweiter Einstellwert etc. zugeordnet. Dies hat den Vorteil, dass bei einem Vergleich, insbesondere einem indirekten Bildvergleich, nämlich z.B. der vorverarbeiteten ersten und/oder zweiten optischen Signale, in Form jeweils eines ersten und/oder zweiten Merkmalsvektors /feature vectors, basierend auf den ersten und zweiten optischen Signalen, die entsprechenden weiteren Datenabschnitte der ersten Datenstruktur, die den ersten optischen Signalen zugeordnet sind, durch einen einfachen Lesezugriff auf die gespeicherte Datenstruktur ermittelt werden können. So kann leicht aus dem derart ermittelten Einstellwert die Regelgröße ermittelt werden.

Alternativ oder kumulativ können die zweiten optischen Signale in einer zweiten Datenstruktur gespeichert werden, wobei in der zweiten Datenstruktur den zweiten optischen Signalen eine während des Schneidprozesses eingestellte SOLL-Fokuslage und optional ein Einstellwert für das optische System zugeordnet ist.

Der Referenz-Schneidprozess oder in der Teach-In Phase ausgeführte Schneidprozess dient zur Erzeugung der Referenzdaten für das optische System. Alternativ oder kumulativ können die Referenzdaten mittels des Teach-In Schneidprozesses innerhalb eines Zeitfensters von 1 Sekunde bis max. 1.5 Sekunden nach dem Start des Referenz-Schneidprozesses erzeugt werden. Damit die ersten optischen Signale, die als Referenz verwendet werden, erfasst werden können, muss sich die Laserschneidmaschine während einer Zeit von beispielsweise 200ms im Referenz-Schneidprozess befinden. Dies kann z. B. beim Schneiden eines ersten Teils eines neuen Schneidplans erfolgen. Ob diese Bedingung erfüllt ist, hängt jedoch stark vom jeweiligen Schneidplan und/oder den Schneidparametern ab, findet jedoch typischerweise während der ersten Sekunde bis max. 1,5 Sekunden nach Beginn eines Referenz-Schneidprozesses statt.

Die (ersten und/oder zweiten) optischen Signale dienen insbesondere zur Schätzung der Fokuslage, verursacht durch Temperaturänderungen. Die optischen Signale werden während des Schneidprozesses bzw. während der Laser aktiviert ist (z.B. bei einem gepulsten Laser) erfasst. Vorzugsweise werden die optischen Signale nur dann erfasst, wenn der Laser aktiviert ist, um das Prozessleuchten zu erfassen.

Die ersten optischen Signale werden in einer Referenzphase oder Teach-In Phase erfasst. Diese Referenzphase kann dem Schneidprozess vorgelagert sein. Die Referenzphase kann auch unmittelbar vor dem Schneidprozess ausgeführt werden.

Die Begriffe "erstes/zweites optisches Signal" sind ebenso so zu verstehen, als dass sie im Plural verwendet werden. Aus einem optischen Signal kann ein Bild erzeugt werden. Im Sinne dieser Offenbarung entspricht deshalb der Begriff "optisches Signal" einem daraus erzeugten Bild. Falls der Begriff "optische/n Signale" ohne das Adjektiv "erste"/"zweite" verwendet wird, bezieht er sich auf die ersten und/oder zweiten optischen Signale. Ansonsten wird differenziert zwischen den ersten und den zweiten optischen Signalen. In der Regel werden mehrere erste und zweite optische Signale erzeugt und/oder eingelesen, nämlich um die unterschiedlichen Zustände des optischen Systems, dessen Einstellungen und/oder die damit verursachten Fokuslagen zu repräsentieren.

Üblicherweise werden in der Referenzphase mehrere optische Signale bzw. mehrere Bilder erzeugt, insbesondere mehrere Bilder für unterschiedliche Zustände des optischen Systems, insbesondere für jeweils unterschiedlich eingestellte Fokuslagen, inkl. der SOLL-Fokuslage und davon positiv sowie negativ abweichenden Fokuslagen.

In der (produktiven) Schneidphase werden die zweiten optischen Signale (auch zu verstehen als Bild) eingelesen. Die zweiten optischen Signale können kontinuierlich während des (produktiven) Schneidprozesses erfasst werden. Alternativ kann konfiguriert werden, wann die zweiten optischen Signale erfasst werden, z.B. nur dann, wenn der Laser aktiviert ist oder z.B., wenn bestimmte Erfassungsbedingungen erfüllt sind, wie z.B. bestimmte Konturen geschnitten werden oder nach einer bestimmten Zeitdauer.

Das Einstellen des optischen Systems soll als initiales Einstellen des optischen Systems auf die SOLL-Fokuslage verstanden werden, also auf die Fokuslage, mit der der (produktive) Schneidprozess ausgeführt werden soll. Durch thermische Einflüsse kann es sein, dass die aktuelle Fokuslage nicht mit der intendierten und initial eingestellten SOLL-Fokuslage übereinstimmt. Dann soll mittels der ermittelten Regelgröße die Fokuslage automatisch nachjustiert bzw. geregelt werden. Dies ist mit dem Begriff "Neu-Einstellen" gemeint.

Der erste Zustand ist als ein kalter oder nicht erwärmter Zustand der Laserschneidmaschine und insbesondere des optischen Systems zu verstehen. Die Referenzphase stimmt identisch oder annähernd mit dem ersten Zustand des optischen Systems überein.

Der zweite Zustand des optischen Systems ist als Zustand zu verstehen, der sich zeitlich nach dem ersten Zustand befindet und/oder der einen erwärmten oder nicht mehr kalten Zustand des optischen Systems kennzeichnet. Der (produktive) Schneidprozess kann in dem ersten Zustand und in dem zweiten Zustand ausgeführt werden. Üblicherweise beginnt der Schneidprozess im ersten (kalten) Zustand und wird dann sukzessive in den zweiten Zustand überführt, da sich das optische System sukzessive im Schneidbetrieb erwärmt.

Der Begriff "Fokuslage" wird in dieser Offenbarung in drei Instanzen verwendet: als eingestellte Fokuslage, als SOLL-Fokuslage und als aktuelle (und möglicherweise gegenüber der SOLL-Fokuslage veränderten bzw. von dieser abweichenden) Fokuslage.

Die SOLL-Fokuslage ist als eine während einem produktiven Schneidprozess als SOLL oder Ziel vorgegebene oder intendierte Fokuslage zu verstehen. Die SOLL-Fokuslage wird in dem Schritt "Einstellen des optischen Systems" eingestellt. Deshalb kann sie auch als für dne produktiven Schneidprozess eingestellte SOLL-Fokuslage bezeichnet werden. Die SOLL-Fokuslage kann als Führungsgröße verstanden werden. Die SOLL-Fokuslage kann auch nominale Fokuslage verstanden werden. Die SOLL-Fokuslage kann einen Ausgangswert darstellen, der durch Anwendung des Verfahrens zur Regelung des optischen Systems beibehalten werden soll.

Die aktuelle Fokuslage ist die Fokuslage, die während eines produktiven Schneidprozesses tatsächlich vorhanden ist und möglicherweise von der SOLL-Fokuslage abweichen kann und deshalb auch als "veränderte Fokuslage" bezeichnet wird, insbesondere "verändert" gegenüber der SOLL-Fokuslage. Die aktuelle Fokuslage ist ein Schätzwert (geschätzte Fokuslage), der auf Basis der ersten und zweiten optischen Signale von dem Driftabschätzer ermittelt wird. Der Begriff "aktuelle Fokuslage" ist somit als aktuelle geschätzte Fokuslage zu verstehen.

Die eingestellte Fokuslage ist die Fokuslage, die in der Referenzphase bzw. bei Ausführung einer Teach-In Fahrt bzw. während des Referenzschneidprozesses jeweils zur Erzeugung der Referenzdaten eingestellt wurde. Üblicherweise werden bei dem Referenzschneidprozess mehrere unterschiedliche Fokuslagen eingestellt, um viele Datenpunkte im ersten (kalten) Zustand zu erhalten.

Der Driftabschätzer dient zur Ausführung einer Driftschätzmethode. Die Driftschätzmethode dient zur Schätzung einer ungewollten Änderung (drift) der Fokuslage über die Zeit. Die Drift/Änderung der Fokuslage kann beispielsweise u.a. durch thermische Einflüsse von Komponenten des optischen Systems verursacht oder mit verursacht sein. Der Driftabschätzer kann in Software und/oder in Hardware realisiert sein. Der Driftabschätzer kann als elektronischer Baustein, beispielsweise als Recheneinheit, Computer, Mikrokontroller, DSP, FPGA und/oder SPS ausgebildet sein.

Die zumindest eine Regelgröße dient zur Regelung (Neu-Einstellung) zumindest eines Aktuators zur Justierung, beispielsweise Positionierung, einer Komponente des optischen Systems. Vorzugsweise werden mehr als nur eine Regelgröße für mehr als einen Aktuator für jeweils eine Komponente des optischen Systems berechnet. Im einfachsten Fall kann die Regelgröße ein Offset, insbesondere zur Positionierung der Linse, sein. Die Regelgröße kann z.B. folgende Befehle umfassen:

- Ein Positionierbefehl für eine elektronisch ansteuerbare Linse, insbesondere für einen Aktor zu vertikalen Positionsveränderung der Linse;
- Ein Krümmungsbefehl zur Einstellung der Krümmung einer Flüssiglinse und/oder
- Ein Radiusbefehl für einen Aktor zur Einstellung eines Radius für einen adaptiven Spiegel.

Im Folgenden werden vorteilhaften Ausführungsformen der Erfindung erläutert, die auch kombiniert zum Einsatz kommen können.

Das Einlesen der Referenzdaten kann durch Auslesen aus einem internen oder externen Speicher erfolgen. Der interne Speicher kann in der Vorrichtung angeordnet sein, die später noch beschrieben wird und die zum Ausführen des Verfahrens dient. Alternativ können die Referenzdaten auch über eine Schnittstelle aus einem externen Speicher eingelesen werden.

Es kann auf bereits erzeugte Referenzdaten zurückgegriffen werden (dann werden sie eingelesen) oder die Referenzdaten können auch erzeugt werden, indem ein Referenz-Schneidprozess, insbesondere zu Beginn eines produktiven Schneidprozesses, ausgeführt wird.

Wie oben bereits ausgeführt, kann das optische System mindestens eine Komponente, vorzugsweise mehrere Komponenten, aufweisen oder umfassen. Alternativ oder kumulativ kann es vorgesehen sein, dass jede der Komponenten einzeln regelbar ist, insbesondere über die mehreren unterschiedlichen Regelgrößen.

Alternativ oder kumulativ erfolgt das Auswerten der eingelesenen zweiten optischen Signale mittels des Driftabschätzers online und/oder kontinuierlich und/oder intermittierend während der (produktive) Laserschneidprozess ausgeführt wird.

Alternativ oder kumulativ dient die Driftschätzmethode zur Schätzung einer Drift des optischen Systems. Die Driftschätzmethode kann ein thermisches Modell verwenden, das durch folgende Exponentialfunktion gekennzeichnet werden kann:

$$\text{Drift} = P_{Laser} * \sum_{i=1}^{n} c_i \left( 1 - e^{-\frac{t}{\tau_i}} \right),$$

wobei verschiedene Zeitkonstanten tau_i unterschiedlich starken Einfluss c_i auf die Drift haben, und/oder wobei die Laserleistung $P_{Laser}$ direkten, insbesondere proportionalen, Einfluss auf die Drift hat. Eine verdoppelte Laserleistung ergibt z.B. eine doppelte Absorption.

Das thermische Modell fungiert als digitaler Zwilling für die Drift. Das thermische Modell kann ausgelegt sein, zur aktuellen Laserleistung einen Offset für die Fokuslage zu berechnen, damit die SOLL-Fokuslage beibehalten werden kann. Das thermische Modell kann mittels eines neuronalen Netzwerkes verfeinert werden, um Über- oder Unterkompensationen zu vermeiden. Das thermische Modell benötigt zur Vorhersage bzw. Abschätzung der Drift keine optischen Signale und kann somit auch bei ausgeschaltetem Laser oder bei einem gepulsten Laser angewendet werden.

Alternativ oder kumulativ kann die Driftschätzmethode einen Verarbeitungsalgorithmus, insbesondere einen indirekten Bildvergleichsalgorithmus, ausführen. "Indirekt" insofern, als dass der Bildvergleich nicht direkt auf den Bildern, sondern auf Basis der Bilder ausgeführt wird. Der Bildvergleich kann z.B. auf Basis von Merkmalen, insbesondere Merkmalsvektoren, ausgeführt werden, die aus den Bildern in einer Vorverarbeitung berechnet worden sind. Insbesondere kann auf Basis der zweiten optischen Signale, insbesondere Bilder aus einem produktiven Schneidprozess, die in einem zweiten Zustand der Laserschneidmaschine, insbesondere in einem zweiten Zeitintervall und/oder bei einer IST-Temperatur erfasst worden sind, ein zweiter Merkmalsvektor berechnet werden. Es kann kumulativ auf Basis von Referenzdaten (auch: Referenzschneiddaten), insbesondere den ersten optischen Signalen, insbesondere Bildern, die in dem ersten Zustand, insbesondere in einem ersten Zeitintervall und/oder bei einer SOLL-Temperatur und/der in einem nicht erwärmten Zustand des optischen Systems erfasst worden sind, ein erster Merkmalsvektor berechnet werden. Der Verarbeitungsalgorithmus, insbesondere der indirekte Bildvergleichsalgorithmus, kann ausgelegt sein, den ersten Merkmalsvektor mit dem zweiten Merkmalsvektor zu vergleichen, um die Drift abzuschätzen.

Alternativ oder kumulativ kann die Driftschätzmethode ein trainiertes neuronales Netzwerk sein oder umfassen, welches insbesondere eine thermische Veränderung des optischen Systems und die dadurch verursachte oder zumindest mit verursachte Veränderung der Fokuslage abgeschätzt (Klassifikation) oder quantifiziert (Regression).

Die Eingangsdaten für das neuronale Netzwerk umfassen die ersten und zweiten optischen Signale. Kumulativ kann eine andere Architektur bereitgestellt werden, bei der noch weitere Eingangsdaten berücksichtigt werden, wie z.B. Schneidparameter, wie z.B. die Laserleistung, die SOLL-Fokuslage, Vorschub, Düsenabstand, Düsentyp und/oder andere Größen, wie z.B. Angaben über das Werkstück (z.B. Material und/oder Dicke).

Die Trainingsdaten für das neuronale Netzwerk können die ersten und zweiten optischen Signale in gekennzeichneter Form umfassen, wobei zur Kennzeichnung (Label) der ersten und zweiten optischen Signale eine Veränderung der Fokuslage verwendet werden. Kumulativ können optional noch die eingestellte Fokuslage der ersten optischen Signale, die aktuelle Fokuslage der zweiten optischen Signale und/oder die SOLL-Fokuslage der zweiten optischen Signale und optional die Einstellwerte für das optische System verwendet werden. Aus der Differenz zwischen aktueller (= durch den Driftabschätzer geschätzten) Fokuslage und SOLL-Fokuslage kann die Veränderung der Fokuslage bzw. deren Drift durch einfache Subtraktion ermittelt werden.

Der Driftabschätzer, auf dem die Driftschätzmethode ausgeführt wird kann alternativ oder kumulativ im Schneidkopf und/oder in einer separaten Steuerung für die Laserschneidmaschine implementiert sein.

Die Driftschätzmethode kann auch verteilt und/oder auf unterschiedlichen Recheneinheiten ausgeführt werden.

Das Verfahren kann zusätzlich umfassen, dass die berechnete Regelgröße während des (produktiven) Schneidprozesses angewendet wird, um der - insbesondere ungewollten - Veränderung der Fokuslage im Vorfeld entgegenzuwirken. Damit kann vorteilhafterweise ein Regelkreis bereitgestellt werden, um den Schneidprozess zu regeln. Dazu wird ein Rückkanal zwischen der Vorrichtung, die die mindestens eine Regelgröße berechnet und der Laserschneidmaschine oder deren Steuerung hergestellt. Der Rückkanal ist insbesondere schnell getaktet, so dass auch bei längerem Schneiden, das mit einer Erwärmung der Komponenten des optischen Systems einhergeht, dennoch die SOLL-Fokuslage beibehalten werden kann.

Alternativ oder kumulativ kann die abgeschätzte Fokuslagenveränderung und/oder die berechnete Regelgröße auf einer Benutzeroberfläche dargestellt werden.

In einer vorteilhaften Ausführung kann das Verfahren und insbesondere der Driftabschätzer aus den folgenden Daten, die aktuelle Fokuslage schätzen und daraus zumindest eine Regelgröße berechnen:

- Menge von ersten optischen Signalen als Referenzdaten im Referenzzustand (kalter Zustand des optischen Systems) mit jeweils zugeordneter eingestellter Fokuslage und/oder optional jeweils zugeordneten Einstellwerten für das optische System;

- Zweite optische Signale, die den aktuellen (produktiven) Schneidprozess mit Prozessleuchten reflektieren; und

- SOLL-Fokuslage für den aktuellen (produktiven) Schneidprozess.

In einer vorteilhaften Ausführung kann aus den eingelesenen zweiten optischen Signalen (Bildern) ein zweiter Merkmalsvektor berechnet werden und/oder aus den eingelesenen ersten optischen Signalen (Bildern) ein erster Merkmalsvektor berechnet werden. Die beiden berechneten Merkmalsvektoren können durch einen indirekten Bildvergleichsalgorithmus auf (annähernde) Übereinstimmung verglichen werden. Der jeweils berechnete Merkmalsvektor kann dem zugrundeliegenden Bild zugeordnet sein. Sobald dasjenige erste Bild (erster Merkmalsvektor) ermittelt wurde, das dem zweiten Bild (zweiter Merkmalsvektor) entspricht, kann in einer ersten Datenstruktur der dem ersten Bild zugeordnete eingestellte Fokuslage ermittelt werden. Durch Subtraktion der ermittelten eingestellten Fokuslage mit der eingestellten SOLL-Fokuslage kann eine Veränderung der Fokuslage abgeschätzt werden.

Vorstehend wurde die Lösung der Aufgabe anhand des Verfahrens beschrieben. Dabei erwähnte Merkmale, Vorteile oder alternative Ausführungsformen sind ebenso auch auf die anderen beanspruchten Gegenstände zu übertragen und umgekehrt. Mit anderen Worten können auch die gegenständlichen Ansprüche (die beispielsweise auf eine Vorrichtung, einen Laserschneidkopf oder ein System gerichtet sind) mit den Merkmalen weitergebildet sein, die in Zusammenhang mit dem Verfahren beschrieben oder beansprucht sind und umgekehrt. Die entsprechenden funktionalen Merkmale des Verfahrens werden dabei durch entsprechende gegenständliche Module, insbesondere durch Hardware-Module oder Mikroprozessor-Module der Vorrichtung ausgebildet und umgekehrt. Die vorstehend im Zusammenhang mit dem Verfahren beschriebenen bevorzugten Ausführungsform der Erfindung werden nicht explizit für die Vorrichtung wiederholt. Grundsätzlich ist die beanspruchte Vorrichtung ausgebildet, das beanspruchte Verfahren auszuführen.

In einem weiteren Aspekt betrifft die Erfindung eine Vorrichtung. Die Vorrichtung ist insbesondere elektronisch und/oder dient zur Regelung eines optischen Systems einer Laserschneidmaschine, wobei die Vorrichtung ausgebildet ist, das vorstehend beschriebene Verfahren in den unterschiedlichen Ausführungsvarianten auszuführen. Die Vorrichtung kann Folgendes umfassen:

- Eine erste Einleseschnittstelle zum Einlesen von Referenzdaten, berechnet aus ersten optischen Signalen, welche ein Prozessleuchten während eines Referenz-Schneidprozesses in einem ersten Zustand des optischen Systems repräsentieren, wobei den ersten optischen Signalen jeweils eine eingestellte Fokuslage und/oder jeweils ein Einstellwert des optischen Systems zugeordnet ist; wobei aus den ersten optischen Signalen ein erster Merkmalsvektor berechnet werden kann, der Bestandteil der Referenzdaten sein kann;

- eine zweite Einleseschnittstelle, die zum Einlesen von zweiten optischen Signalen, die ein Prozessleuchten während eines von einem Prozessor initiierten Schneidprozesses in einem zweiten Zustand des optischen Systems repräsentieren;

- Den Prozessor, der zum Einstellen des optischen Systems auf eine SOLL-Fokuslage und zum Initiieren eines Schneidprozesses ausgebildet ist;

- Einen Driftabschätzer, der zum Auswerten der eingelesenen zweiten optischen Signale gegebenenfalls in vorverarbeiteter Form, insbesondere in Form eines daraus berechneten zweiten Merkmalsvektors, durch Vergleich mit den erzeugten oder eingelesenen Referenzdaten ausgebildet ist, um eine Veränderung der Fokuslage abzuschätzen;

- Einen Regler, der zum Ermitteln zumindest einer Regelgröße zum Neu-Einstellen des optischen Systems anhand der vom Driftabschätzer abgeschätzten Veränderung der Fokuslage bestimmt ist, um die veränderte Fokuslage in die jeweils vom Prozessor für den initiierten Schneidprozess eingestellte SOLL-Fokuslage zurückzuführen, falls der Driftabschätzer eine, einen vorgegebenen Schwellwert überschreitende Veränderung der Fokuslage abgeschätzt hat.

Die ersten und zweite Einleseschnittstelle können in einer gemeinsamen Datenschnittstelle implementiert sein. Die Vorrichtung kann vorteilhafterweise noch eine weitere Regel-Schnittstelle zur Übermittelung der ermittelten zumindest einen Regelgröße an die Laserschneidmaschine oder ihre Steuerung umfassen. Die Regel-Schnittstelle kann auch mit einer oder mit beiden der Einleseschnittstellen kombiniert werden oder in diese integriert sein.

Die Aufgabe wird auch gelöst mit einem Laserschneidkopf mit einer Vorrichtung, wie oben beschrieben, um das optische System mit der ermittelten Regelgröße so zu regeln, dass die aktuelle Fokuslage mit der jeweils eingestellten SOLL-Fokuslage übereinstimmt.

Die Aufgabe wird auch gelöst durch ein System zum Regeln eines Laserschneidprozesses mit folgenden Einheiten:

- einer Vorrichtung, wie oben beschrieben,
- einer Laserschneidmaschine,
- eine Sensoranordnung, insbesondere zur Erfassung der ersten und zweiten optischen Signale und
- datentechnischen Schnittstellen zwischen den vorstehend genannten oder im System implementierten Einheiten, die zusätzlich zu den genannten Einheiten noch verwirklicht sein können.

Üblicherweise ist die Sensoranordnung in der Laserschneidmaschine, insbesondere im oder am Schneidkopf ausgebildet. Alternativ kann auch die Vorrichtung die optische Sensoranordnung umfassen. Alternativ können die mit der optischen Sensoranordnung erfassten (erste und zweiten) optischen Signale auch über eine (z.B. erste) Einleseschnittstelle eingelesen werden, insbesondere dann, wenn die Sensoranordnung als separate Einheit bereitgestellt wird.

Die Aufgabe wird auch gelöst durch ein Computerprogramm oder ein Computerprogrammprodukt mit einem solchen Computerprogramm, wobei das Computerprogramm in eine Speichereinheit einer Recheneinheit ladbar ist und Programmcodeabschnitte enthält, um die Recheneinheit zu veranlassen, das Verfahren zur Positionsregelung eines optischen Systems gemäß einem der vorangehenden Verfahrensansprüche auszuführen, wenn das Computerprogramm in der Recheneinheit ausgeführt wird.

Eine alternative Aufgabenlösung sieht daher ein Speichermedium, insbesondere ein computerlesbares Speichermedium vor, das zur Speicherung des offenbarungsgemäßen Verfahrens (als Programmcode) bestimmt ist und von einem Computer oder einem Prozessor des Computers lesbar ist. Der Programmcode veranlasst bei der Ausführung durch eine Prozessorschaltung eines Computers oder eines Computerverbunds, eine Ausführungsform des offenbarungsgemäßen Verfahrens auszuführen. Das Speichermedium kann z.B. zumindest teilweise als ein nichtflüchtiger Datenspeicher (z.B. als eine Flash-Speicher und/oder als SSD - solid state drive) und/oder zumindest teilweise als ein flüchtiger Datenspeicher (z.B. als ein RAM - random access memory) bereitgestellt sein. Das Speichermedium kann in der Prozessorschaltung in deren Datenspeicher angeordnet sein. Das Speichermedium kann aber auch beispielsweise als sogenannter Appstore-Server im Internet betrieben sein. Durch den Computer oder Computerverbund kann eine Prozessorschaltung mit zumindest einem Mikroprozessor bereitgestellt sein.

Der Programmcode kann als Binärcode oder Assembler und/oder als Quellcode einer Programmiersprache (z.B. C) und/oder als Programmskript (z.B. Python) bereitgestellt sein.

Kurze Beschreibung der Figuren

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:

Fig. 1    zeigt ein Ablaufdiagramm eines Verfahrens gemäß einer Ausführungsform der Erfindung und in einer Variante;

Fig. 2    zeigt ein schematisches Blockdiagramm eines Systems gemäß einer Ausführungsform der Erfindung;

Fig. 3    zeigt ein weiteres schematisches Blockdiagramm eines Systems gemäß einer anderen Ausführungsform der Erfindung;

Fig. 4    zeigt auch ein schematisches Blockdiagramm eines Systems gemäß einer weiteren Ausführungsform der Erfindung;

Fig. 5    ist eine Übersichtsfigur zur Ermittlung der thermischen Drift;

Fig. 6    ist eine Übersichtsfigur von Komponenten der Laserschneidmaschine, die Einfluss auf die thermische Drift haben; und

Fig. 7    zeigt eine Darstellung eines Driftabschätzers gemäß einem Ausführungsbeispiel der Erfindung.

Detaillierte Beschreibung der Figuren

Die Erfindung dient zur Erkennung der thermischen Drift. Der Begriff "thermische Drift" soll als ungewünschte Abweichung der Fokuslage verstanden werden, die durch thermische Einflüsse auf das optische System der Laserschneidmaschine verursacht oder mit verursacht wird.

Das oben Beschriebene lässt sich mit anderen Worten und auf eine mögliche konkretere Ausgestaltung der Offenbarung bezogen, wie nachfolgend beschrieben, zusammenfassen, wobei die nachfolgende Beschreibung als für die Offenbarung nicht einschränkend auszulegen ist.

Da sich bei Anwendungen mit hoher Laserleistung optische Komponenten (transmissiv und reflektiv) trotz bestmöglicher Kühlung durch Absorption erwärmen, kann dies dazu führen, dass der Schneidprozess nicht mehr optimal ist, da sich die Fokuslage ungewollt geändert hat. Dieser Einfluss wird als "Drift" bezeichnet.

Das hier vorgestellte Verfahren und die anderen beanspruchten Gegenstände sollen dazu dienen, mittels Sensoren und Auswertung diese Drift zu erkennen und zu kompensieren. Durch das Erkennen und Kompensieren der Drift wird der gewünschte Prozess über Stunden in der gewünschten optimalen Einstellung fortgesetzt - und die Wahrscheinlichkeit kann kontinuierlich sehr geringgehalten werden.

Die Drift wird kontinuierlich korrigiert bzw. geregelt, insbesondere bei Verwendung eines thermischen Modells als dynamische Funktion der Laserleistung.

Durch Verwendung einer Schneidkopfkamera als optischem Sensor zusammen mit künstlicher Intelligenz kann die Wahrscheinlichkeit einer Drift durch Anpassung der Koeffizienten der dynamischen Funktion geringgehalten werden.

Da die Korrektur instantan erfolgt, ist die Wahrscheinlichkeit einer kritischen Drift ausgeschlossen.

Der "Schneidprozess" verwendet eine hohe Laserleistung, um das Werkstück, z.B. Blech, entsprechend dem Schneidplan zu schneiden. Die Parameter steuern die Laserleistung, die Geschwindigkeit/Vorschub, die Düse, den Düsenabstand und das auszublasende Gas. Ein sehr wichtiger Parameter ist die Position des Brennpunkts - normalerweise im Inneren des Materials. Die Drift wirkt sich direkt auf die Fokusposition aus. Da thermische Prozesse in der Regel einer Mischung von E-Funktionen folgen, kann die Drift mit dieser Formel abgeschätzt werden:

$$\text{Drift} = P_{Laser} * \sum_{i=1}^{n} c_i \left( 1 - e^{-\frac{t}{\tau_i}} \right),$$

wobei c eine Konstante und t die Zeit und Tau_i eine weitere Zeitkonstante ist.

Wenn die Formel so angepasst wird, dass sie dynamischen thermischen Veränderungen folgt (Abkühlung, Positionierung zwischen Teilen oder Modulation des Lasers beim Schneiden von Ecken), kann die tatsächliche Drift geschätzt werden. Das thermische Modell wirkt wie ein "digitaler Zwilling" der optischen Drift.

In einem nächsten Schritt kann die tatsächliche optische Drift durch Regelung eines Aktuators zur Änderung der Fokusposition automatisch kompensiert werden.

Die thermische Stabilität kann sich von Maschine zu Maschine - und auch im Laufe der Zeit - ändern. Diese Unterschiede können mit dem erfindungsgemäßen Vorschlag berücksichtigt werden.

Daher sind die Zeitkonstanten T_(i ) konstant, aber die Koeffizienten c_i müssen durch Messung der tatsächlichen Drift aktualisiert werden.

Die eingelesenen optischen Signale bzw. Bilder werden verarbeitet, um den Driftfaktor zu bestimmen. Nach der Berechnung der Differenz zur Referenz von 0 Drift können die Koeffizienten c_i des thermischen Modells aktualisiert werden, um das thermische Modell zu verfeinern. Darüber hinaus beschreiben die Koeffizienten c_i auch die thermische Robustheit eines optischen Systems. Diese Information kann für wichtige Vorhersagen im Rahmen einer "predictive maintenance" verwendet werden.

Die Sensoren zur Erfassung der ersten und zweiten optischen Signale können Bestandteil einer optischen Sensoranordnung sein. Ein mögliches Bildverarbeitungssystem kann aus einem CMOS-Flächenbildsensor bestehen. Es sind auch andere Alternativen denkbar, um ähnliche Ergebnisse zu erzielen, wie ein Polarisationsbildsensor, UV-Bildsensor, SWIR-Bildsensor, ToF-Bildsensor und/oder ein ereignisbasierter Bildsensor.

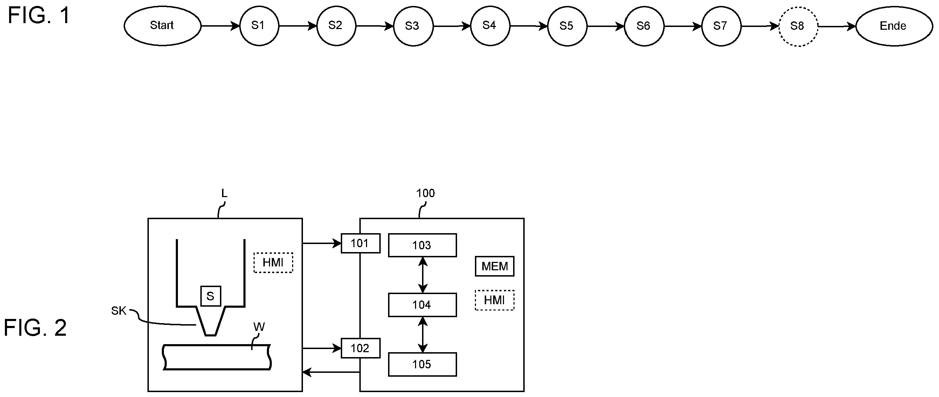

**Fig.** 1 zeigt das Verfahren zur Regelung eines optischen Systems einer Laserschneidmaschine L in einer bevorzugten Ausführungsvariante. In einem ersten Schritt S1 können Referenzdaten erzeugt werden. Dies kann durch Ausführen eines Referenz-Schneidprozesses auf der Laserschneidmaschine L erfolgen. Insbesondere werden erste optische Signale, insbesondere eine Reihe von unterschiedlichen Bildern, erfasst, die ein Prozessleuchten während eines Referenz-Schneidprozesses in einem ersten Zustand des optischen Systems, insbesondere in einem kalten Zustand des optischen Systems bzw. zu Beginn des Schneidens, repräsentieren.

Aus diesen ersten optischen Signalen (Bilddaten) werden die Referenzdaten erzeugt. Im einfachsten Fall können die Referenzdaten mit den ersten optischen Signalen überein stimmen. Vorzugsweise werden aus den ersten optischen Signalen zumindest ein erster Merkmalsvektor extrahiert, der als Referenzdaten dient. Aus den Referenzdaten kann eine Datenstruktur, nämlich die erste Datenstruktur erstellt werden, indem den ersten optischen Signalen eine jeweils eingestellte Fokuslage sowie jeweils ein Einstellwert des optischen Systems (z.B. Positionswert einer optischen Linse) zugeordnet ist, die angewendet wurden, um die ersten optischen Signale zu erfassen.

Alternativ zum Erzeugen der Referenzdaten, wie oben beschrieben, in Schritt S1, können bereits erzeugte Referenzdaten auch in Schritt S2 eingelesen werden. In diesem Fall können die Referenzdaten in bereits erzeugter Form vorliegen und z.B. in einem Speicher gespeichert sein, aus dem sie ausgelesen werden können. Alternativ oder kumulativ ist es möglich, die erste Datenstruktur auszulesen.

In einem Schritt S3 kann das optische System auf eine SOLL-Fokuslage eingestellt werden. Die SOLL-Fokuslage definiert, mit welcher gewünschten Fokuslage der nachfolgende produktive Schneidprozess ausgeführt werden soll. Nach dieser Einstellung kann der Schneidprozess in Schritt S4 initiiert oder ausgelöst werden. Dies kann beispielsweise durch einen entsprechenden Befehl erfolgen.

Während der Ausführung des (produktiven) Schneidprozesses werden in Schritt S5 kontinuierlich oder zu bestimmten Zeitpunkten oder nach bestimmten Ereignissen zweite optische Signale, insbesondere eine Reihe von unterschiedlichen Bildern eingelesen.

In einem nachfolgenden Schritt S6 werden die eingelesenen zweiten optischen Signale ausgewertet. Dies erfolgt durch einen Driftabschätzer 104, der als elektronisches Bauteil vorgesehen sein kann. Der Driftabschätzer 104 ist insbesondere ausgelegt, die eingelesenen zweiten optischen Signale auszuwerten, indem diese, insbesondere in vorverarbeiteter Form (z.B. in Form eines aus den zweiten optischen Signalen berechneten zweiten Merkmalsvektors) mit den in Schritt S1 erzeugten oder in Schritt S2 eingelesenen Referenzdaten (mit dem ersten Merkmalsvektor) verglichen werden, um eine Veränderung der Fokuslage abzuschätzen. Insbesondere kann ein indirekter Bildvergleichsalgorithmus zum Feature-Vergleich angewendet werden. Sobald ein Satz von übereinstimmenden Merkmalen (berechnet aus den Bildern, insbesondere aus einem Paar von ersten und zweiten optischen Signalen) gefunden wurde, können die jeweiligen Einträge aus der ersten und/oder zweiten Datenstruktur ausgelesen werden, um eine Drift auf Basis der erfassten optischen Signale abzuschätzen und entsprechende Regelgröße, im einfachste Fall einen Offset für die Neu-Einstellung des optischen Systems, insbesondere der Linse, zu ermitteln.

Falls der Driftabschätzer 104 eine, einen vorgegebenen Schwellwert überschreitende Veränderung der Fokuslage abgeschätzt hat wird in Schritt S7 zumindest einer Regelgröße zum Regeln bzw. Neu-Einstellen des optischen Systems anhand der abgeschätzten Veränderung der Fokuslage ermittelt, um die veränderte Fokuslage in die jeweils eingestellte SOLL-Fokuslage zurückzuführen. Danach kann das Verfahren enden oder kontinuierlich während des produktiven Schneidprozesses angewendet werden.

Optional, deshalb ist dieser Schritt in Fig. 1 gestrichelt dargestellt, kann die ermittelte zumindest eine Regelgröße in Schritt S8 an die Steuerung der Laserschneidmaschine L zur Anwendung übermittelt werden.

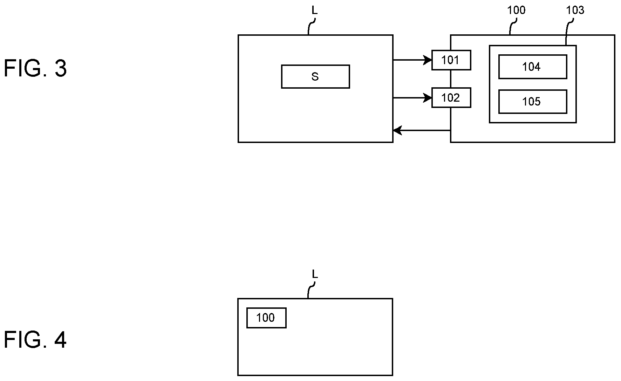

**Fig. 2** zeigt in einer schematischen Darstellung eine Vorrichtung 100, die ausgebildet ist, das eben beschriebene Verfahren auszuführen. Die Vorrichtung 100 kann in unterschiedlichen Varianten bereitgestellt werden, die nachfolgend in den Fig. 3 und Fig. 4 näher beschrieben werden. Bei der in Fig. 2 dargestellten Variante ist die Vorrichtung 100 mit zwei Einleseschnittstellen 101, 102 ausgebildet, die zum Einlesen der ersten und zweiten optischen Signale dienen, die von einem oder mehreren optischen Sensoren einer optischen Sensoranordnung S erfasst werden, die auf der Laserschneidmaschine L, insbesondere am Schneidkopf SK angeordnet sein können.

Das Ergebnis, das nach Ausführung der Vorrichtung 100 bereitgestellt wird, nämlich die ermittelte zumindest eine Regelgröße, kann in Form eines Regelkreises an die Laserschneidmaschine L oder ihrer Steuerung zurückgeleitet werden, um den Laserschneidprozess entsprechend zu regeln und zwar insbesondere derart, dass die durch Erwärmung möglicherweise veränderte aktuelle Fokuslage wieder in die SOLL-Fokusalge zurückgeführt wird. Dies ist in Fig. 2 (und Fig. 3) mit dem Pfeil gekennzeichnet, der von der Vorrichtung 100 auf die Laserschneidmaschine L gerichtet ist zur Übermittlung der wenigstens einen Regelgröße.

Die Vorrichtung umfasst des Weiteren einen Prozessor 103, den Driftabschätzer 104 und den Regler 105 auf. Der Prozessor 103 ist zum Einstellen des optischen Systems auf eine SOLL-Fokuslage und zum Initiieren eines (Schneidprozesses, der auch als produktiver Schneidprozess bezeichnet werden kann, ausgebildet. Der Regler 105 ist zum Ermitteln zumindest einer Regelgröße zum Neu-Einstellen bzw. Regeln des optischen Systems anhand der vom Driftabschätzer 104 abgeschätzten Veränderung der Fokuslage bestimmt, um die veränderte Fokuslage in die jeweils eingestellte SOLL-Fokuslage zurückzuführen, falls der Driftabschätzer 104 eine, einen vorgegebenen Schwellwert überschreitende Veränderung der Fokuslage abgeschätzt hat. Der Driftabschätzer 104 kann insbesondere, wie oben erläutert, zum Vergleich von einem ersten Merkmalsvektor (aus den Referenzdaten) mit einem zweiten Merkmalsvektor aus den aktuellen Schneidprozessdaten bestimmt sein.

Optional kann die Vorrichtung 100 einen Speicher MEM zur Speicherung der eingelesenen Daten, insbesondere der ersten und zweiten optischen Signale, der eingestellten Fokuslage aus dem Referenz-Schneidprozess, der SOLL-Fokuslage aus dem (produktiven) Schneidprozess und/oder der abgeschätzten Veränderung der Fokuslage und/oder der ermittelten Regelgröße aufweisen.

Wie vorstehend bereits erwähnt, kann auch eine andere Architektur gewählt werden, so dass der Driftabschätzer 104 und der Regler 105 in dem Prozessor 103 ausgebildet sein können, wie dies in **Fig. 3** dargestellt ist.

Alternativ ist es möglich, wie in **Fig. 4** gezeigt, dass die Vorrichtung 100 direkt auf der Laserschneidmaschine implementiert ist.

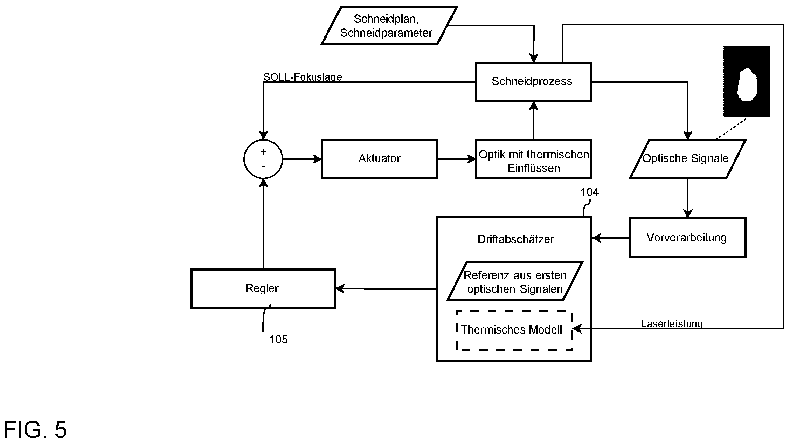

In **Fig. 5** ist eine Übersichtsfigur zur Darstellung der Einbindung der erfindungsgemäßen Vorrichtung 100 zur Regelung der Fokuslage, um die Drift aufgrund von thermischen Einflüssen bereits im Vorfeld zu vermeiden.

Auf Basis der während dem Schneidprozess erfassten Bilder (zweiten optischen Signalen), in Fig. 5 als "optische Signale" bezeichnet, insbesondere dem daraus berechneten ersten Merkmalsvektor, schätzt der Driftabschätzer 104 die tatsächliche bzw. aktuelle - möglicherweise gegenüber der eingestellten SOLL-Fokuslage veränderte - Fokuslage.

Die eingelesenen zweiten optischen Signale können also einer Vorverarbeitung unterzogen werden, insbesondere um einen zweiten Merkmalsvektor zu extrahieren oder berechnen.

Falls das Zwischenergebnis des Driftabschätzers 104 indiziert, dass die geschätzte aktuelle Fokuslage nicht mit der SOLL-Fokuslage übereinstimmt, dann wird vom Regler 105 die Regelgröße ermittelt, um das optische System und insbesondere seine einzelnen Komponenten über zumindest eine Aktuator neu-einzustellen bzw. zu regeln, so dass die aktuelle Fokuslage wieder in die SOLL-Fokuslage zurückgeführt werden kann.

Der Driftabschätzer 104 führt eine vorzugsweise computer-implementierte Driftschätzmethode aus.

Der Driftabschätzer 104 kann einen Verarbeitungsalgorithmus, insbesondere einen indirekten Bildvergleichsalgorithmus, ausführen, um durch Vergleich zwischen Merkmalsvektoren, die aus den ersten und zweiten optischen Signalen berechnet wurden, und/oder einer Referenzierung auf zugeordnete Fokuslagen und/oder Einstellwerte eine Regelgröße zu ermitteln, die einem Regler 105 zugeführt wird, um die ggf. veränderte Fokuslage in die SOLL-Fokuslage zurückzuführen, die in Schritt S3 eingestellt worden ist.

Insbesondere können bei dem indirekten Bildvergleichsalgorithmus die berechneten Merkmale aus den ersten optischen Signalen (von dem Referenz-Schneidprozess) bzw. der erste Merkmalsvektor mit den Merkmalen aus den zweiten optischen Signalen aus dem aktuellen Schneidprozess bzw. dem zweiten Merkmalsvektor verglichen werden, um dann in der ersten Datenstruktur die zugeordneten weiteren Datenabschnitte zu ermitteln, die zumindest die jeweils eingestellte Fokuslage umfassen und optional noch die Einstellwerte für die Aktoren zur Einstellung der Komponenten des optischen Systems umfassen können.

Kumulativ oder alternativ kann der Driftabschätzer 104 auf ein thermisches Modell zurückgreifen, um die Regelgröße zu ermitteln. Die Regelgröße kann dann verwendet werden, um zumindest einen Aktuator so zu regeln, dass die ggf. veränderte Fokuslage in die SOLL-Fokuslage zurückgeführt wird, die in Schritt S3 eingestellt worden ist.

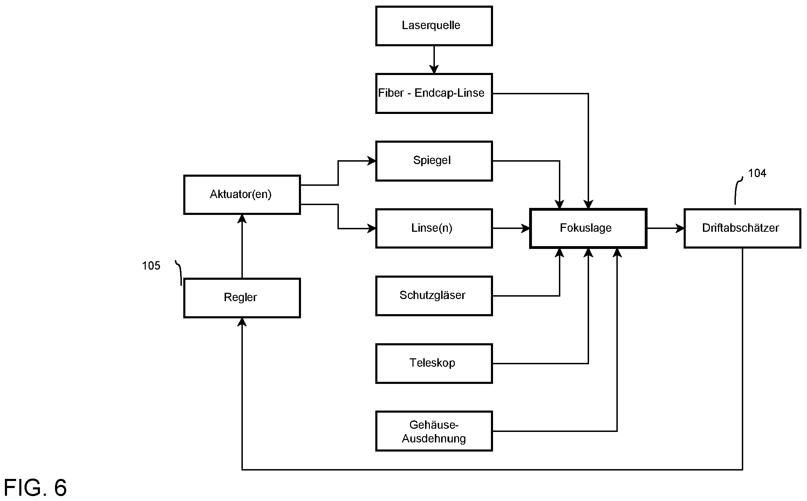

Der Begriff "optisches System" fasst mehrere Komponenten mit unterschiedlicher thermischer Kühlung zusammen: Eine mögliche Topologie ist in **Fig. 6** dargestellt. Jede Komponente hat ihre eigenen thermischen Eigenschaften - einige von ihnen werden gekühlt. Alle wirken sich auf die Fokuslage aus. Deshalb werden erfindungsgemäß mehrere Regelgrößen ermittelt, um insbesondere die einzelnen Komponenten des optischen Systems jeweils separat und/oder einzeln neueinstellen bzw. regeln zu können.

Die Komponenten können eine Faser/Fiber mit einer Endcap Linse, einen Spiegel, eine oder mehrere optische Linsen, Schutzgläser, ein Teleskop sowie ein Gehäuse für das optische System umfassen.

Der Driftabschätzer 104 schätzt die aktuelle Fokuslage und eine Abweichung von der SOLL-Fokuslage. Fall eine Abweichung ermittelt worden ist, wird von dem Regler 105 eine Regelgröße ermittelt, um die Aktuatoren entsprechend derart zu regeln, dass die aktuelle Fokuslage wieder in die SOLL-Fokuslage, die in Schritt S3 eingestellt worden ist, überführt werden kann.

Grundsätzlich berechnet eine Steuerung, z.B. eine speicherprogrammierbare Steuerung, SPS, die Bahnen für die nächsten Millisekunden. Bisher konnte die Rückmeldung aus dem Schneidprozess mittels Lichtsensor, der die Prozessemission misst, nur ausgelesen werden. Mit dem Vorschlag dieser Offenbarung wird es möglich, den Schneidprozess auch zu regeln, also insbesondere aufgrund der Ergebnisse des Driftabschätzers 104 die Komponenten des optischen Systems neu-einzustellen. Damit wird eine dynamische Interaktion möglich.

Mit dem erfindungsgemäßen Verfahren bzw. einer intelligenten Steuerung, ICP, Intelligent Cutting Process, wird ein modularer Rahmen als Erweiterung der Laserschneidmaschine L bereitgestellt, der mit der SPS, dem Schneidkopf SK mit dem optischen Sensor der optischen Sensoranordnung S (z.B. Kamera) und der Benutzeroberfläche HMI verbunden ist (HMI in Fig. 2 gezeigt). Das HMI kann in einem Browser und/oder in einer Maschinenbedienungssoftware angezeigt werden. In dem HMI der Steuerung, z.B. der Vorrichtung 100, können die erfassten optischen Signale (Kamerabilder) und/oder Statusinformationen angezeigt werden. Statusinformationen können z.B. als Ampelsignal ausgegeben werden: grün - für aktuelle Fokuslage im Schneidprozess noch im Toleranzbereich um die SOLL-Fokuslage, orange - für aktuelle Fokuslage im Schneidprozess hat einen konfigurierbaren Schwellenwert leicht überschritten und rot - für aktuelle Fokuslage im Schneidprozess hat einen konfigurierbaren Schwellenwert deutlich überschritten.

Der Datenaustausch zwischen den Komponenten des Systems kann über eine geeignete Netzwerkverbindung ausgeführt werden, wie z.B.: EtherCAT, Ethernet (ADS, http, GigE Vision).

Das System fungiert als Prozesssteuerung bzw. Regelung und hat mehrere Schnittstellen zu Geräten oder Einrichtungen an der Laserschneidmaschine L. So sammelt bzw. erfasst es Sensordaten, wie erste und zweite optische Sensordaten (Fotodiode zur Messung des Prozesslichts), Düsendistanzsignal, Position von Sensoren an der Achse und/oder viele andere Signale. Die Kamerabilder (erste und zweite optische Signale) und optional andere Maschinendaten, wie die Schneidparameter sind verfügbar. Das System verarbeitet die Daten in Echtzeit.

Der Bildprozessor (als Teil des Prozessors 103 implementierbar) extrahiert Merkmale mithilfe von Bildalgorithmen und/oder Methoden der künstlichen Intelligenz, KI.

Das System kann ein Skript ausführen, um die Rohdaten (insbesondere die ersten und zweiten optischen Signale) und/oder die vom Bildprozessor extrahierten Merkmale mit Hilfe von Filtern und Bedingungen (if ... then ... else ... end) zu verarbeiten. Das Skript entscheidet, ob der Schneidprozess und insbesondere das optische System angepasst werden soll und setzt die Offset/Override-Werte zur Neu-Einstellung (FeedOverride, LaserpowerOffset, FocalOffsetOptotune, FocalOffset, GasPressureOffset, NozzleDistanceOffset). Das Verhalten der Laserschneidmaschine L kann durch Änderung der Offsets/Overrides schnell angepasst werden.

Das System sammelt zum einen die ersten und zweiten optischen Signale (Bilder) oder liest diese ein, zum anderen ist auch ein Rückkanal vorgesehen, insbesondere ein schneller Rückkanal zur Steuerung, z.B. SPS, um die Offsets/Overrides einzustellen (Neu-Einstellen / Regeln) und/oder Meldungen, wie z.B. Alarmzustände, wie 'Schneidverlust' oder 'Düsenverlust' auszutauschen.

Schließlich können Daten, die ein unregelmäßiges Verhalten zeigen, gesammelt und/oder in einem Speicher MEM (Siehe Fig. 2) gespeichert werden. Im Falle eines Dateitests werden die Dumps automatisch an einen Cloud-Speicher (nicht dargestellt) gesendet. Der Cloud-Speicher kann über eine Netzwerkverbindung zugreifbar und z.B. als Server implementiert sein.

Das System bzw. das hier vorgestellte Framework hat eine stark erweiterbare Architektur. Zuerst kann der Prozesse damit begonnen werden, dass der Schneidplan mit den Schneidparametern eingelesen wird. Der Bediener weist die Laserschneidmaschine L an, mit dem Schneiden eines neuen Blechs zu beginnen. Der Laserprozess sendet während des Schneidprozesses Prozesslicht aus. Kamerabilder werden mit der Schneidkopfkamera von dem emittierten Prozesslicht als erste und zweite optische Signale erfasst. Ein gemeinsamer Vorprozessor kann ausgebildet sein, der das jeweilige Bild dreht, beschneidet, skaliert und normalisiert. Auch eine Gammakorrektur kann verwendet werden. Die Bildverarbeitung wird verwendet, um Merkmale 1..n, wie den Mittelwert (Bild) oder den Durchmesser der Düsenöffnung zu extrahieren oder zu berechnen. Die berechneten Merkmale können weiteren Algorithmen zugeführt werden, insbesondere einem indirekten Bildvergleichsalgorithmus. Der Vergleich zwischen aktuellen Daten, insbesondere Schneiddaten aus dem aktuellen Schneidprozess, und Referenzschneiddaten aus dem Referenzschneidprozess findet indirekt nach dem Backbone mit den Merkmalen statt - entweder durch den Head oder durch Anwendung einer Subtraktion. Die gleichen Bilder werden in neuronalen Netzen (Faltungsneuronale Netze) verarbeitet. Die Modelle können parallel vorhersagen, so dass mehrere Merkmale A..Z verfügbar sind. Eine Multithreading-Implementierung ermöglicht die gleichzeitige Vorhersage desselben vorverarbeiteten Bildes durch verschiedene, parallel betriebene Inferenz-Ausführungseinheiten. Diese Ausführungseinheiten, die in der Inferenzphase angewendet werden, können in der Vorrichtung 100 und insbesondere in dem Prozessor 103 ausgebildet sein. Der Prozess-Controller kann als High-Level-Arbiter (Entscheidungslogik) fungieren, um nützliche Loopback-Parameter, insbesondere die zumindest eine Regelgröße, zu definieren. Die Signale aus Zeitreihen (Merkmale, Sensorsignale) können gefiltert werden, um mehr Vertrauen in den Prozesszustand zu haben, bevor ein Rückkopplungsparameter festgelegt wird. Wenn der Prozessregler ein mehrdeutiges unregelmäßiges Muster erkennt, werden die Daten im Dump-Controller (z.B. implementiert auf dem Speicher MEM) gesammelt. Die Dumps können in eine Cloud geladen werden. Entweder durch Ingestion (Push-Betrieb, also ein automatischer Upload) oder durch manuellen Upload. Falls möglich, werden die Labels (Kennzeichnungen) ebenfalls als Dump zur Speicherung und/oder Übertragung inkludiert, so dass das neuronale Netzwerk ein überwachtes Lernen starten kann, und insbesondere ohne die Notwendigkeit einer teuren manuellen Erstellung von gelabelten Daten als Trainingsdaten.

Im Folgenden wird der grundlegende Ansatz beschrieben, wie das KI-Modell, insbesondere die neuronalen Netzwerke erstellt und betrieben werden. In der Entwicklungsphase müssen Daten gesammelt werden. Die Ergebnisse müssen definiert und validiert werden, um einen gelabelten (mit Kennzeichnungen versehenen) Datensatz von ersten optischen Signalen (Bildern aus der Referenzprozess) zu erhalten. Die Daten müssen in Tensoren umgewandelt werden, dem Eingabeformat für eine Trainingsmaschine für neuronale Netze (z. B. keras/tensorflow, pytorch). Durch Anpassung der Netztopologie und der Hyperparameter können die Genauigkeit und die Empfindlichkeit des Modells verbessert werden. Das Modell muss in einem kompatiblen Format gespeichert werden, damit das Edge Device der Laserschneidmaschine L die Bilder in Echtzeit verarbeiten kann. Sobald das Modell auf der Maschine L oder einer Steuerung läuft, wird die Prozesssteuerung die Merkmale in Echtzeit verarbeiten, um den Schneidprozess zu verbessern. Im Falle von unregelmäßigen Mustern, schlechtem Vertrauen oder Erkennung "außerhalb des Bereichs" (out of domain) werden neue Daten gesammelt, indem Dumps zusammengestellt werden. Die Daten werden entweder manuell oder automatisch in das Daten-Backbone hochgeladen. Während der Datenaufbereitung wird die Mischung aus neuen und alten Daten vorbereitet, um das neuronale Netz zu trainieren und zu validieren. Nach der Modellvalidierung wird das Modell auf Laserschneidmaschinen L eingesetzt.

Es kann eine gemischte Modell-Eingabe (Input für das neuronale Netzwerk) verwendet werden. Normalerweise wird das vorverarbeitete Bild dem Eingang des Modells zugeführt. Da neuronale Netze mehrere Eingänge haben können, können Skalare wie Laserleistung, Fokusposition, Vergrößerung, Düsenabstand, Gasdruck, Geschwindigkeit, Düsentyp und/oder andere Schneidparameter an das Modell gesendet werden.

Da Einzelbilder möglicherweise keine stabilen Merkmale liefern, erhält das Netz mehrere Sensorwerte oder Bilder (Aggregation der Historie).

Im Beispiel des Driftschätzers 104 wurde eine Referenz für 0 Drift genommen. Die Topologie kann wie folgt aussehen: Wenn Merkmale aus der Referenz (Referenz-Schneidprozess) und dem aktuellen Prozess verfügbar sind, vergleicht ein Kopf (ebenfalls ein neuronales Netz) die beiden Merkmalsvektoren und erstellt ein neues Merkmal, das auf dem Vergleich zwischen der Referenz und dem aktuellen Prozess basiert.

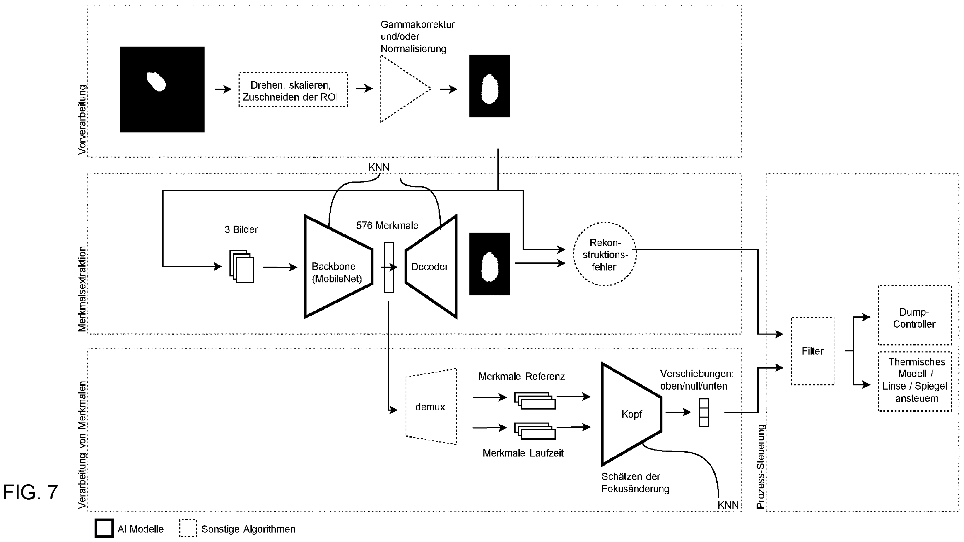

Das System mit dem Driftabschätzer 104 kann unter Bezugnahme auf Fig. 7 wie folgt beschrieben werden.

Vorverarbeitung: Auf die ersten und/oder zweiten optischen Signale (Kamerabild) können folgende Funktionen angewendet werden: Drehen, Skalieren, Zuschneiden der ROI (Region of Interest), Gammakorrektur und/oder Normalisierung.

Merkmalsextraktion: Das neuronale Netzwerk, z.B. Mobilenet_V2 als Backbone extrahiert/kodiert die 576 Merkmale aus 3 Bildern. Mobilenet_V2 ist ein tiefes und hochgradig optimiertes neuronales Netzwerk, das vortrainiert wurde. Der Decoder reproduziert ein synthetisches Bild aus den Merkmalen. Vergleicht man das reale Eingabe- und das generierte Ausgabebild, so ist der Rekonstruktionsfehler (mittlerer quadratischer Fehler, mean square error, mse) gering, wenn die Art des Bildes in der Trainingsmenge erfasst wurde. Wenn mse hoch ist, müssen neue Daten gesammelt werden.

Verarbeitung von Merkmalen: Um den Referenzzustand 0 (kühl) mit dem aktuellen Zustand aus dem aktuellen Schneidprozess (aufgeheizt) zu vergleichen, werden die Merkmale aus der Referenz (erste optische Signale) mit den Laufzeitmerkmalen (zweite optische Signalen) verglichen. Das vollverknüpfte Netz 'Kopf' sagt mit hoher Wahrscheinlichkeit voraus, dass es keine Änderung/Verschiebung oder eine Verschiebung nach oben oder eine Verschiebung nach unten gibt (3 Klassen).

Die ersten und zweiten optischen Signale werden, wie z.B. in Fig. 7 dargestellt, vorverarbeitet und in erste und zweite Merkmale (oder erste und zweite Merkmalsvektoren) umgewandelt. Ein Merkmalsvektor (Vektor mit Merkmalen) wird dabei mit dem Backbone in Form eines KNN wie z. B. dem Mobilenet, aus vorzugsweise 3 Bildern erstellt.

Für die nachgelagerte Filterung, werden vorzugsweise aus 3x3 Bildern 3 Merkmale erstellt.

Aus den ersten optischen Signalen liegen somit 3 Merkmale vor. Die 3 Merkmale aus den ersten optischen Signalen werden vorzugsweise nur einmal errechnet und anschließend in einen Speicher zur späteren Verwendung geschrieben.

Während des aktuellen Schneidprozesses (Laufzeit) liegen zyklisch ebenfalls 3 neue Merkmale vor.

Der Kopf (kein KNN wie in Fig. 7 eingezeichnet, sondern ein Fully connected network) kann aus den je 3 Merkmalen die Drift bestimmen, wobei alle Kombinationen beider je 3 Merkmale berücksichtigt werden (3x3=9 Ergebnisse für Fokuslagen-Drift).

Während dem Schneiden liegen somit zyklisch nach 3 Bildern 9 Ergebnisse für Fokuslagen-Drift vor. Ein Zeitreihen-Filter in Form eines Mittelwertfilters bestimmt aus einer Folge von beispielsweise 6*9=54 Ergebnissen ein gefiltertes Ergebnis (dfl_mean).

Anmerkung zu Merkmalen:

- Die Länge des Vektors kann 576 betragen, der Kopf verarbeitet 2 Eingänge ä 576 Werte (Embeddings).
- Die Länge des Vektors kann 1 betragen, der Kopf führt lediglich eine Subtraktion aus (hier wird kein NN verwendet). Die Differenz gibt an, ob eine Fokuslagen-Drift vorliegt.

Prozess-Steuerung: Nach der Filterung wird z.B. die Linse und/oder der Spiegel kontrolliert (oder das thermische Modell wird im Falle einer Verschiebung verfeinert).

Die Prozess-Steuerung kann das thermische Modell umfassen, welches der erwarteten Drift während dem Schneiden mittels Koeffizienten $c\_i$ entgegenwirkt. Die Drift wird somit bei einem gleichbleibenden optischen System minimiert. Falls sich am optischen System jedoch etwas verändert, könnte dennoch eine Drift auftreten.

Die Prozess-Steuerung vergleicht kontinuierlich die Ergebnisse dfl_mean mit einem oberen und unteren Schwellwert (z. Bsp. +/-0.3mm). Wird trotz thermischem Modell eine Drift festgestellt, passt die Prozess-Steuerung die Koeffizienten $c\_i$ an. Eine Anpassung könnte beispielsweise eine Erhöhung der Koeffizienten $c\_i$ um 5% bedeuten. Die Regelung bzw. der closed-loop findet insofern statt, dass die angepassten Koeffizienten des thermischen Modells zu einer veränderten Ansteuerung der optischen Aktuatoren und somit zur Reduktion der Drift führt.

Zum Training des Netzwerkes:
Während die Laserschneidmaschine L eine beliebige Kontur schneidet, erzwingt die Prozesssteuerung die Änderung der Fokusposition (Aktuator für Linsen und/oder Spiegel) in der Abfolge von z.B. 6 Schritten: [0, 0.166, 0.33, 0, -0.166, -0.33] (mm). Pro Einstellung können z.B. 40 Bilder (insgesamt 6x40=240 Bilder) mit der entsprechenden Fokusposition als Label ausgegeben werden. Auch der Schneidparameter kann Teil des Datensatzes sein.

Von einem einzigen Parameter einer Maschine müssen viele Datensätze erfasst werden. Nach einer vorgegebenen Versuchsplanung (Design of Experiment, DoE) müssen die Daten gesammelt werden.

Beim Training des Netzes werden Bilder aus verschiedenen Schritten als Paare erste optische Signale und zweite optische Signale kombiniert, so dass der Kopf (head) und das Backbone trainiert / feinabgestimmt werden können.

Das hier vorgestellte Verfahren bzw. System kann zur Qualitätskontrolle durch Prozessstabilisierung verwendet werden. Weiterhin werden Schneidverluste und/oder ein Loss of Cut vermieden durch Prozessstabilisierung.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

**Patentansprüche**

1. Verfahren zur Regelung eines optischen Systems einer Laserschneidmaschine (L), wobei das Verfahren folgende Verfahrensschritte umfasst:

   - Erzeugen (S1) oder Einlesen (S2) von Referenzdaten, berechnet aus ersten optischen Signalen, welche ein Prozessleuchten während eines Referenz-Schneidprozesses in einem ersten Zustand des optischen Systems repräsentieren, wobei den ersten optischen Signalen jeweils eine eingestellte Fokuslage und/oder jeweils ein Einstellwert des optischen Systems zugeordnet ist;
   - Einstellen (S3) des optischen Systems auf eine SOLL-Fokuslage und Initiieren (S4) eines Schneidprozesses;
   - Einlesen (S5) von zweiten optischen Signalen, die ein Prozessleuchten während des initiierten Schneidprozesses in einem zweiten Zustand des optischen Systems repräsentieren;
   - Auswerten (S6) der eingelesenen zweiten optischen Signale, gegebenenfalls in vorverarbeiteter Form, mit einem Driftabschätzer (104), durch Vergleich mit den erzeugten oder eingelesenen Referenzdaten , um eine Veränderung der Fokuslage abzuschätzen;
   - Falls der Driftabschätzer (104) eine, einen vorgegebenen Schwellwert überschreitende Veränderung der Fokuslage abgeschätzt hat:
   - Ermitteln (S7) zumindest einer Regelgröße zum Neu-Einstellen des optischen Systems anhand der abgeschätzten Veränderung der Fokuslage, um die veränderte Fokuslage in die jeweils eingestellte SOLL-Fokuslage zurückzuführen.

2. Verfahren nach Anspruch 1, wobei das Verfahren zusätzlich umfasst:

   - Anwenden (S8) der berechneten Regelgröße, um der - insbesondere ungewollten
   - Veränderung der Fokuslage im Vorfeld entgegenzuwirken.

3. Verfahren nach einem der vorangehenden Ansprüche, wobei das optische System mindestens eine Komponente, insbesondere mehrere Komponenten, aufweist und/oder wobei jede der Komponenten mit gesonderten Regelgrößen einzeln regelbar ist.

4. Verfahren nach einem der vorangehenden Ansprüche, wobei das Einlesen der Referenzdaten durch Auslesen aus einem internen oder externen Speicher erfolgt.

5. Verfahren nach einem der vorangehenden Ansprüche, wobei die Driftschätzmethode zur Schätzung einer Drift des optischen Systems, dient und ein thermisches Modell verwendet, das durch folgende Exponentialfunktion gekennzeichnet werden kann:

$$\text{Drift} = P_{Laser} * \sum_{i=1}^{n} c_i \left( 1 - e^{-\frac{t}{\tau_i}} \right),$$

wobei verschiedene Zeitkonstanten tau-i unterschiedlich starken Einfluss $c_i$ auf die Drift haben, und/oder wobei die Laserleistung $P_{Laser}$ direkten Einfluss auf die Drift hat.

6. Verfahren nach einem der vorangehenden Ansprüche, wobei die Driftschätzmethode einen Verarbeitungsalgorithmus ausführt, indem Merkmale aus den zweiten optischen Signalen, insbesondere Bildern, aus einem produktiven Schneidprozess, die in einem zweiten Zustand der Laserschneidmaschine (L), insbesondere in einem zweiten Zeitintervall und/oder bei einer IST-Temperatur erfasst worden sind, mit Merkmalen aus Referenzdaten, insbesondere aus den ersten optischen Signalen, insbesondere Bildern, verglichen werden, die in dem ersten Zustand, insbesondere in einem ersten Zeitintervall und/oder bei einer SOLL-Temperatur und/der in einem nicht erwärmten Zustand des optischen Systems erfasst worden sind.

7. Verfahren nach einem der vorangehenden Ansprüche, wobei die Driftschätzmethode ein trainiertes neuronales Netzwerk ist oder umfasst (KNN), welches insbesondere eine thermische Veränderung des optischen Systems und die dadurch verursachte oder zumindest mit verursachte Veränderung der Fokuslage abschätzt oder quantifiziert.

8. Verfahren nach dem unmittelbar vorangehenden Anspruch, wobei Eingangsdaten für das neuronale Netzwerk (KNN) die ersten und zweiten optischen Signale umfassen.

9. Verfahren nach einem der Ansprüche 7 oder 8, wobei Trainingsdaten für das neuronale Netzwerk (KNN) die ersten und zweiten optischen Signale in gekennzeichneter Form umfassen, wobei zur Kennzeichnung der ersten und zweiten optischen Signale eine Veränderung der Fokuslage und optional Einstellwerte für das optische System verwendet werden.

10. Verfahren nach einem der vorangehenden Ansprüche, wobei der Driftabschätzer (104), auf dem eine Driftschätzmethode ausgeführt wird, im Schneidkopf (SK) und/oder in einer separaten Steuerung implementiert ist.

11. Verfahren nach einem der vorangehenden Ansprüche, wobei die ersten optischen Signale oder ein daraus berechneter erster Merkmalsvektor in einer ersten Datenstruktur gespeichert werden, wobei in der ersten Datenstruktur den ersten optischen Signalen eine während des Referenz-Schneidprozesses eingestellte Fokuslage und optional ein Einstellwert für das optische System zugeordnet ist und/oder wobei die zweiten optischen Signale oder ein daraus berechneter zweiter Merkmalsvektor in einer zweiten Datenstruktur gespeichert werden, wobei in der zweiten Datenstruktur den zweiten optischen Signalen eine während des Schneidprozesses eingestellte SOLL-Fokuslage und optional ein Einstellwert für das optische System zugeordnet ist.

12. Vorrichtung (100) zur Regelung eines optischen Systems einer Laserschneidmaschine (L), wobei die Vorrichtung ausgebildet ist, ein Verfahren gemäß einem der vorangehenden Verfahrensansprüche auszuführen, umfassend:

- Eine erste Einleseschnittstelle (101) zum Einlesen von Referenzdaten, berechnet aus ersten optischen Signalen, welche ein Prozessleuchten während eines Referenz-Schneidprozesses in einem ersten Zustand des optischen Systems repräsentieren, wobei den ersten optischen Signalen jeweils eine eingestellte Fokuslage und/oder jeweils ein Einstellwert des optischen Systems zugeordnet ist;
- eine zweite Einleseschnittstelle (102), die zum Einlesen von zweiten optischen Signalen, die ein Prozessleuchten während eines von einem Prozessor (103) initiierten Schneidprozesses in einem zweiten Zustand des optischen Systems repräsentieren;
- Den Prozessor (103), der zum Einstellen des optischen Systems auf eine SOLL-Fokuslage und zum Initiieren eines Schneidprozesses ausgebildet ist;
- Einen Driftabschätzer (104), der zum Auswerten der eingelesenen zweiten optischen Signale, gegebenenfalls in vorverarbeiteter Form, durch Vergleich mit den erzeugten oder eingelesenen Referenzdaten ausgebildet ist, um eine Veränderung der Fokuslage abzuschätzen;
- Einen Regler (105), der zum Ermitteln zumindest einer Regelgröße zum Neu-Einstellen des optischen Systems anhand der vom Driftabschätzer (104) abgeschätzten Veränderung der Fokuslage bestimmt ist, um die veränderte Fokuslage in die jeweils eingestellte SOLL-Fokuslage zurückzuführen, falls der Driftabschätzer (104) eine, einen vorgegebenen Schwellwert überschreitende Veränderung der Fokuslage abgeschätzt hat.

13. Laserschneidkopf mit einer Vorrichtung (100) nach Anspruch 12, um das optische System mit der ermittelten Regelgröße so zu regeln, dass die aktuelle Fokuslage mit der jeweils eingestellten SOLL-Fokuslage übereinstimmt.

14. System zum Regeln eines optischen Systems während eines Laserschneidprozesses mit folgenden Einheiten:

    - einer Vorrichtung (100) nach Anspruch 12,
    - einer Laserschneidmaschine (L),
    - einer Sensoranordnung und
    - datentechnischen Schnittstellen zwischen den genannten Einheiten.

15. Computerprogramm, wobei das Computerprogramm in eine Speichereinheit einer Recheneinheit ladbar ist und Programmcodeabschnitte enthält, um die Recheneinheit zu veranlassen, das Verfahren zur Positionsregelung eines optischen Systems gemäß einem der vorangehenden Verfahrensansprüche auszuführen, wenn das Computerprogramm in der Recheneinheit ausgeführt wird.

FIG. 1

Start → S1 → S2 → S3 → S4 → S5 → S6 → S7 → S8 → Ende

FIG. 2

FIG. 3

FIG. 4

FIG. 5

20

Laserquelle

Fiber - Endcap-Linse

Spiegel

Aktuator(en)

Linse(n)

Fokuslage

Driftabschätzer

104

105

Regler

Schutzgläser

Teleskop

Gehäuse-
Ausdehnung

FIG. 6

FIG. 7

Europäisches
Patentamt

European
Patent Office

Office européen
des brevets

## EUROPÄISCHER RECHERCHENBERICHT

Nummer der Anmeldung

EP 23 18 6329

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2018 121836 A1 (FANUC CORP [JP]) 14. März 2019 (2019-03-14) | 1-4,6-15 | INV. B23K26/03 |
| Y | * Abbildungen 10, 11 *<br>* Absatz [0009] *<br>* Absatz [0022] – Absatz [0023] * | 5 | B23K26/046<br>B23K26/38<br>B23K26/70<br>B23K31/00 |
| | ----- | | |
| X | VASILESKA EMA ET AL: "In-line monitoring of focus shift by kerf width detection with coaxial thermal imaging during laser cutting", THE INTERNATIONAL JOURNAL OF ADVANCED MANUFACTURING TECHNOLOGY, SPRINGER, LONDON, Bd. 118, Nr. 7-8, 1. Oktober 2021 (2021-10-01), Seiten 2587-2600, XP037665674, ISSN: 0268-3768, DOI: 10.1007/S00170-021-07893-8 [gefunden am 2021-10-01] | 1-4,6, 10,12-15 | |
| Y | * Zusammenfassung *<br>* Kapitel 2.3 *<br>* Kapitel 3 * | 5 | RECHERCHIERTE SACHGEBIETE (IPC)<br><br>B23K |
| | ----- | | |
| X | WO 2011/009594 A1 (PRECITEC KG [DE]; PRECITEC ITM GMBH [DE]; STORK INGO [DE]) 27. Januar 2011 (2011-01-27) | 1-4,6-15 | |
| Y | * Abbildungen 1, 2 *<br>* Seite 13, Zeile 18 – Zeile 23 *<br>* Seite 11, Zeile 9 – Seite 12, Zeile 2 *<br>* Seite 18, Zeile 28 – Seite 19, Zeile 9 * | 5 | |
| | ----- | | |
| Y | WO 2020/069866 A1 (PRECITEC GMBH & CO KG [DE]) 9. April 2020 (2020-04-09) * Seite 5, Zeile 29 – Seite 6, Zeile 22 * | 5 | |
| | ----- | | |

Der vorliegende Recherchenbericht wurde für alle Patentansprüche erstellt

| Recherchenort | Abschlußdatum der Recherche | Prüfer |
|---|---|---|
| München | 12. Januar 2024 | Prager, Emanuel |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**     EP 23 18 6329

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-01-2024

| Im Recherchenbericht angeführtes Patentdokument | Datum der Veröffentlichung | Mitglied(er) der Patentfamilie | | Datum der Veröffentlichung |
|---|---|---|---|---|
| DE 102018121836 A1 | 14-03-2019 | CN | 109500491 A | 22-03-2019 |
| | | DE | 102018121836 A1 | 14-03-2019 |
| | | JP | 6717790 B2 | 08-07-2020 |
| | | JP | 2019051540 A | 04-04-2019 |
| | | US | 2019076959 A1 | 14-03-2019 |
| WO 2011009594 A1 | 27-01-2011 | CN | 102497952 A | 13-06-2012 |
| | | EP | 2456592 A1 | 30-05-2012 |
| | | JP | 5172041 B2 | 27-03-2013 |
| | | JP | 2012533434 A | 27-12-2012 |
| | | US | 2012188365 A1 | 26-07-2012 |
| | | WO | 2011009594 A1 | 27-01-2011 |
| WO 2020069866 A1 | 09-04-2020 | CN | 113195150 A | 30-07-2021 |
| | | DE | 102018124627 A1 | 09-04-2020 |
| | | EP | 3860797 A1 | 11-08-2021 |
| | | JP | 7165819 B2 | 04-11-2022 |
| | | JP | 2022504327 A | 13-01-2022 |
| | | US | 2021387281 A1 | 16-12-2021 |
| | | WO | 2020069866 A1 | 09-04-2020 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018119900 B4
- DE 102012001609
- DE 102019122064 A1